# EUROPEAN PATENT SPECIFICATION

(11) **EP 0 527 833 B1**
(45) Date of publication and mention of the grant of the patent: **03.06.1998**
(21) Application number: 91908881.5
(22) Date of filing: 30.04.1991
(51) Int. Cl.: G06F 9/44

(54) **OBJECT BASED COMPUTER SYSTEM**
OBJEKTBASIERTES RECHNERSYSTEM
SYSTEME INFORMATIQUE ORIENTE OBJETS

(30) Priority: 30.04.1990 GB 9009699
(43) Date of publication of application: 24.02.1993
(73) Proprietor: Hewlett-Packard Company, Palo Alto, California 94304 (US)
(72) Inventor: DUGGAN, Hugh Hewlett-Packard Limited Filton Road, Bristol BS12 6QZ (GB); MOREL, William, Paul Hewlett-Packard Limited, Bristol BS12 6QZ (GB); Robson, Christopher Hewlett-Packard Ltd., Stoke Gifford Bristol BS12 6QZ (GB)
(74) Representative: Squibbs, Robert Francis
(86) International application number: GB9100690
(87) International publication number: WO9117499

(56) References cited:
- PROC. FROM THE 2ND INTL. CONF. ON EXPERT DATABASE SYSTEMS. vol. XIII, April 25, 1988, TYSONS CORNER US pages 107 - 131; A.MOTRO ET AL: 'The Design of KIVIEW: An Object-Oriented Browser '
- PROC. FROM THE 24TH ACM/IEEE DESIGN AUTOMATION CONFERENCE. 1987, MIAMI BEACH US pages 335 - 340; S.HEILER ET AL: 'An Object-Oriented Approach To Data Management: Why Design Databases Need It. '
- COMPUTER. vol. 19, no. 12, December 1986, LONG BEACH US pages 37 - 44; G. WIEDERHOLD: 'Views, Objects and Databases '

## Description

The invention relates to an object based computer system.

Object based computer systems facilitate multi-tasking and multi-user operations where common data files may be accessed concurrently by different tasks operated from the same terminal or operated by different users employing respective terminals. A windows environment is generally employed in conjunction with an object based system to enable windows to be allocated to respective concurrent tasks. There follows an overview of an object based system in a windows environment which will help define terms used herein.

An OBJECT is a combination of data and method code which is normally stored on disk. An object may be INACTIVE, when it is identified simply as a disk file, or ACTIVE, when it has a PROCESS, or executable file, associated with it. When active, at least parts of the object are held in the computer RAM and the object is defined by the state of the associated process rather than by its file.

Objects can be LINKED to other objects so that changes in one are reflected in the object or objects with which it is linked by virtue of MESSAGES which are passed between the linked objects. The system is controlled by an OBJECT MANAGER which is an application running in the windows environment and which controls activation and deactivation of objects, and the passage of messages between objects.

An object is sometimes a CONTAINER which contains as notional parts other objects. Examples of container objects in a distributed office system are a desktop, folder and a document. A VARIABLE DIMENSION DATA OBJECT (VDO) is a data store of which the values of elements may be viewed and changed directly by a user.

Object based systems have suffered the disadvantage common to multi-tasking or multi-user systems sharing data files. This is that although, with careful record-locking procedures, different tasks or users can, in concurrent sessions, alter data in the same data file (or object) each alteration and display is effectively carried out independently. The users do not have immediate cross-references and updating to changes made by other users to the data file at the same time.

We have devised a solution to this problem which depends on splitting an object between a SEMANTIC part (which defines the state of the object) and a PRESENTATION part (for presenting to a user the state of the object). Indeed, conceptually one can think of there being separate semantic objects and presentation objects. In addition, when using a windows user interface, there are windows for viewing objects and facilitating multi-tasking. In this specification, the presentation part or presentation object is something which is utilised by a window and forms part of the window for the time in which the window is viewing the object in question and generally a distinction between the window and the presentation part or object will not be made.

Semantic objects have data stored in a particular storage domain. A storage domain may be regarded as closely equivalent to a storage medium such as a hard disc or floppy disc in the sense that all objects in a given storage domain are on-line together or are offline together. Consequently, a single machine may support a plurality of storage domains.

The present invention could be applied in a single computer having one or more storage domains but is primarily concerned with an object based syst having a plurality of user stations. Such a system may be provided by a single central processing device having a plurality of user stations coupled to it, of it may be provided by a distributed processing network consisting of a number of independent processing units each having a respective station associated with it. In the system of the present invention an object has an implicit presentation, which will look the same however viewed.

It is possible to open one or more windows on each object. The windows manage the display and input/output (lexical) interaction in the system. The user of multiple windows in conjunction with an object enables employment of the techniques of sharing (multiple windows to a common object) and distributed (window on one machine and object on another) applications.

We define a VIEWER as an object which allows users to access other objects by providing the appearance of the object to the user and accepting user input for data manipulation. Viewers have hitherto been known as TASK WINDOWS, but a window is part only of the viewer. The object being viewed controls its own state and provides the methods for access to and manipulation of that state.

Users have the ability to NAVIGATE their viewers around the object world. In turn, the viewer is linked to different objects so as to allow the user to observe and manipulate the objects. It is important to note the concept of navigation of a viewer in this system. A user does not need to open a new window for each object.

Proc. 2nd Intl. Conf. on Expert Data Systems, 25-27-04-88, Tyson's Corner, US, pp 107-131; A. Notro et al: "The design of KIVIEW : an object-oriented browser@, describes an object-orientated database browser called KIVIEW. KIVIEW provides a navigation feature where the user repeatedly displays new views of objects that are referred in current views. Views may be synchronized : the user sets up several views, linked in a tree-like structure, so that when the information displayed in the root view is modified, the contents of the other views change automatically.

When sharing or multi-user operations are being effected, each task or user associated with a particular object is a REFEREE of that object. It is ensured that each active object retains references to its referees so that they are sent messages to be notified of changes during object processing.

The semantic/presentation split allows multiple viewers to be attached to an object. It is important to remember in this case that all viewers are seeing the same object, not a version of it. This is important, as we have a basically 'physical' model of the object world, when a user manipulates an object he is actually physically changing it for everyone. This could lead to conflict when two or more users are trying to manipulate the same thing. A solution is to provide a presence mechanism whereby referees of an object being viewed are notified of the presence of each other by indications in their respective viewers.

Indication of the presence of concurrent viewers of an object greatly facilitates the user's vision of the system and under-pins the user model which the system establishes. Instead of merely observing the effects of his own manipulations of data the user can be aware that other viewers are present and thus capable of separate manipulation of the same data.

A user always knows what he has requested by way of a manipulation. This is the local feedback provided by the viewer. The underlying object updates all viewers of its state, thus the user will see the end effect. In such conflict conditions it is not possible to guarantee that the request and the end effect match, but the user will not be misled as to what has happened. One of the important benefits of the presence mechanism is to help explain these situations to the user. The semantic/presentation split also allows viewers to be remote (from the object), without the user losing the benefit of immediate feedback of his manipulations.

Users themselves can move from one terminal to another. The identity of the users is obtained from Personal Identity Cards which they use to log on to the system.

As an extension of the presence mechanism there may be provided a coupling facility whereby different viewers may be coupled together in a set so that navigation within the system of one viewer by its user has the effect of passing navigational messages to the other viewer or viewers in the set so that those other viewers may indicate and/or follow the navigation positions of the said one viewer. With this coupling facility, a first user can, via his viewer, conduct one or more other viewers around the system for guidance, instruction, or co-operative work.

Although the coupling mechanism may implement only navigational display messages, the principal advantage lies in the application of the navigational message to drive the coupled viewers in company with each other around the system. With such an arrangement, a hierarchy is preferably established, whereby one viewer is the guide and the or each other viewer is a follower.

The present invention employs the navigation facility in order to provide an enhancement to the system.

According to the invention there is provided an object based computer system as defined in claim 1.

With the present invention a user can elect to link his viewer to a specific sequence object and thus follow the path, manipulating such or merely observing objects as he may choose. This has application in training or in the provision of standard updating routines, for example.

Generally, the object world is a network in which the different objects are nodes. The sequence objects will carry details of the sequence of nodes to be followed. The path may be graphically represented on request.

Conveniently, provision is made in the path objects for a user to skip or retrace steps in the path. Control may be implemented, for example via a display of 'PLAY'; 'FAST FORWARD" and "REWIND" buttons.

The present invention can be regarded as an extension of a coupling facility, effectively providing coupling of a viewer with an automatic viewer. Again, it is not mandatory that the viewer must follow the predetermined path. The user may choose to branch from the path or introduce loops. Such modifications may be recorded as a modified path for future use.

The invention will further be described with reference to the accompanying drawings, of which: -
Figure 1 is a schematic diagram of an object based computer system embodying the invention;
Figure 2 is a diagram illustrating the user's model of a system which incorporates the invention;
Figure 3 is a further diagram illustrating part of the user's model of the system;
Figure 4 is a diagram of a user's view of a system having a presence mechanism and a coupling facility;
Figure 5 is a schematic diagram of a user's view of the coupling of a sequencing object to a viewer;
Figure 6 is a diagram of a user's view of the system;
Figure 7 is a schematic diagram illustrating program procedures in the coupling of two viewers; and
Figure 8 is a schematic diagram of program procedures associated with a sequence object.

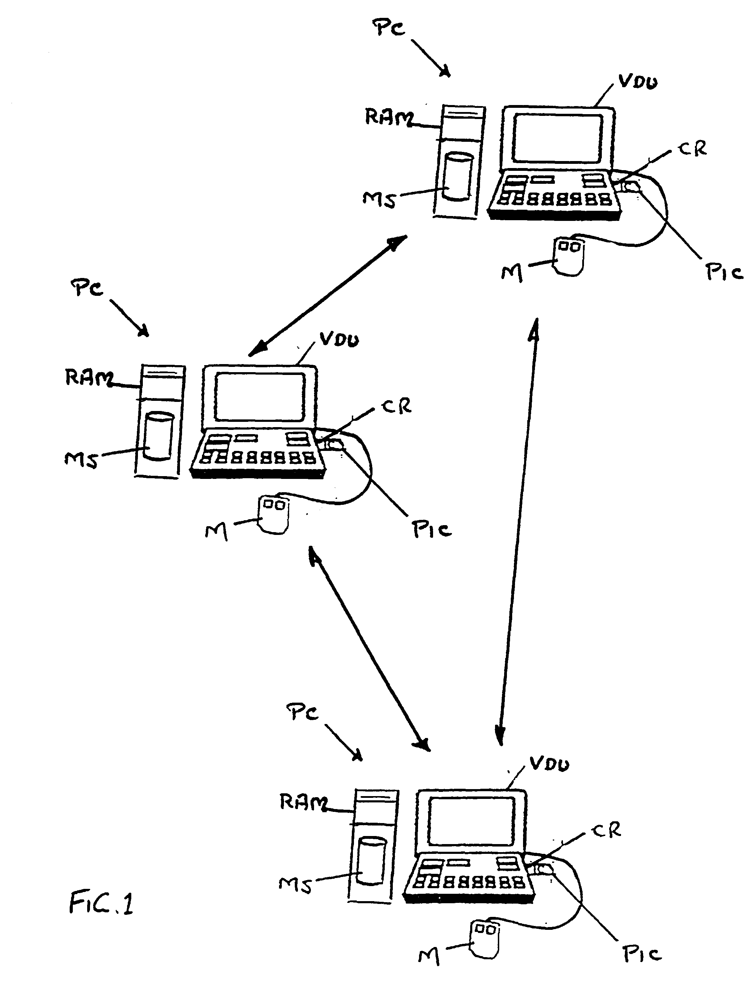

Referring to Figure 1 there is shown an object based computer system which comprises a network of personal computers PC, each of which has a central processor unit CPU; random access memory RAM; mass storage facilities MS; a visual display unit VDU and a mouse M. In the drawing these units are designated for one computer only. Each computer also has a card reader CR.

The mass storage facilities MS constitute domains in the system which are generally associated with the user or users who habitually use that computer. Thus, objects associated with those users are stored there. These objects include, for example, the desk top objects for each habitually local user.

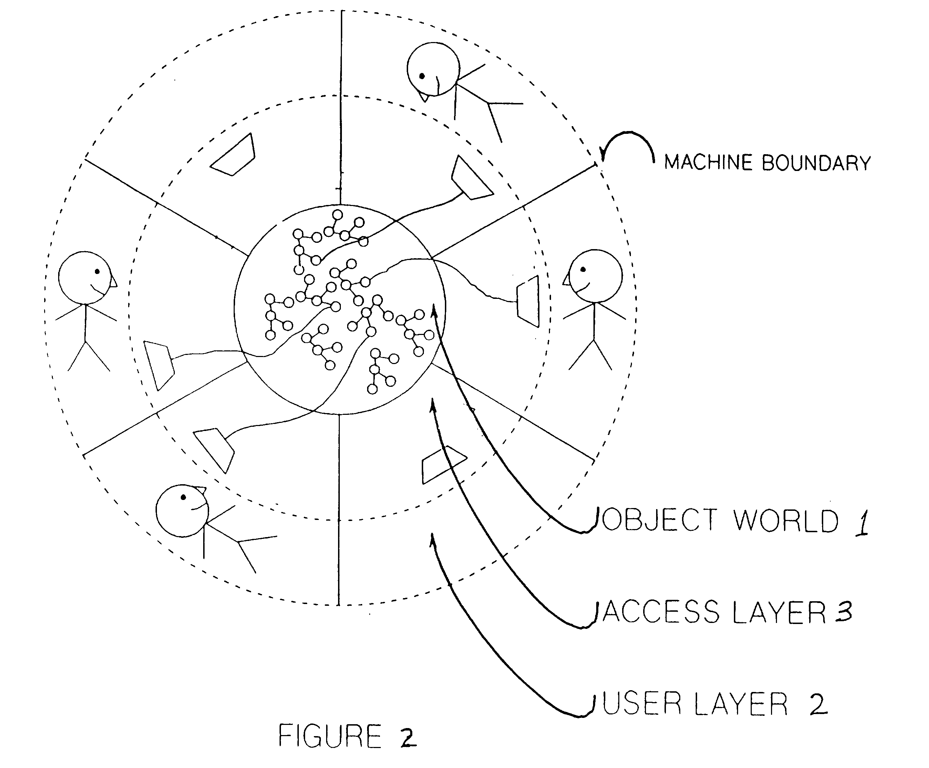

Referring to Figure 2 there is shown a model of a distributed office computer system which comprises several computers linked together in a network as in Figure 1. Each computer has the usual input/output facilities of keyboard, mouse and VDU as well as a CPU and hard disk on which are held object files. The core of the system is the object world 1 containing objects to which the users 2 have access.

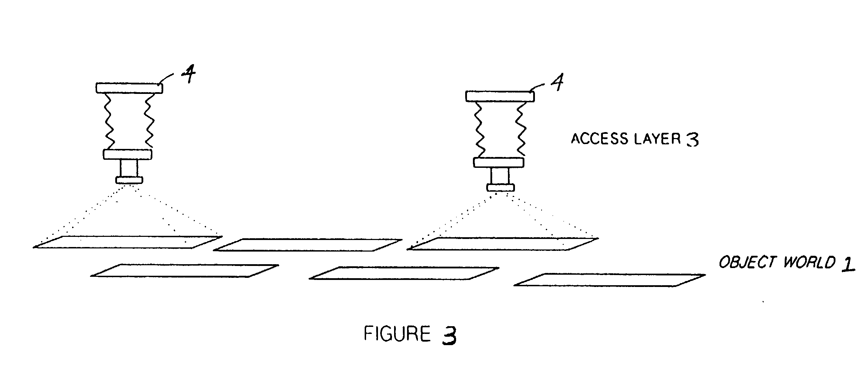

An important aspect of the system is the model of it which the user has. Critical in this is a layered structure which includes an access layer 3 whereby the users gain access to the objects in the object world 1. Figure 3 shows more specifically the access layer including viewers 4 which are window objects and which are able to be navigated to observe and manipulate different objects in the object world. It is important to note the concept of navigation of a viewer between objects in this system. A user does not need to open a new window for each object. The viewers must be regarded as mechanisms in their own right.

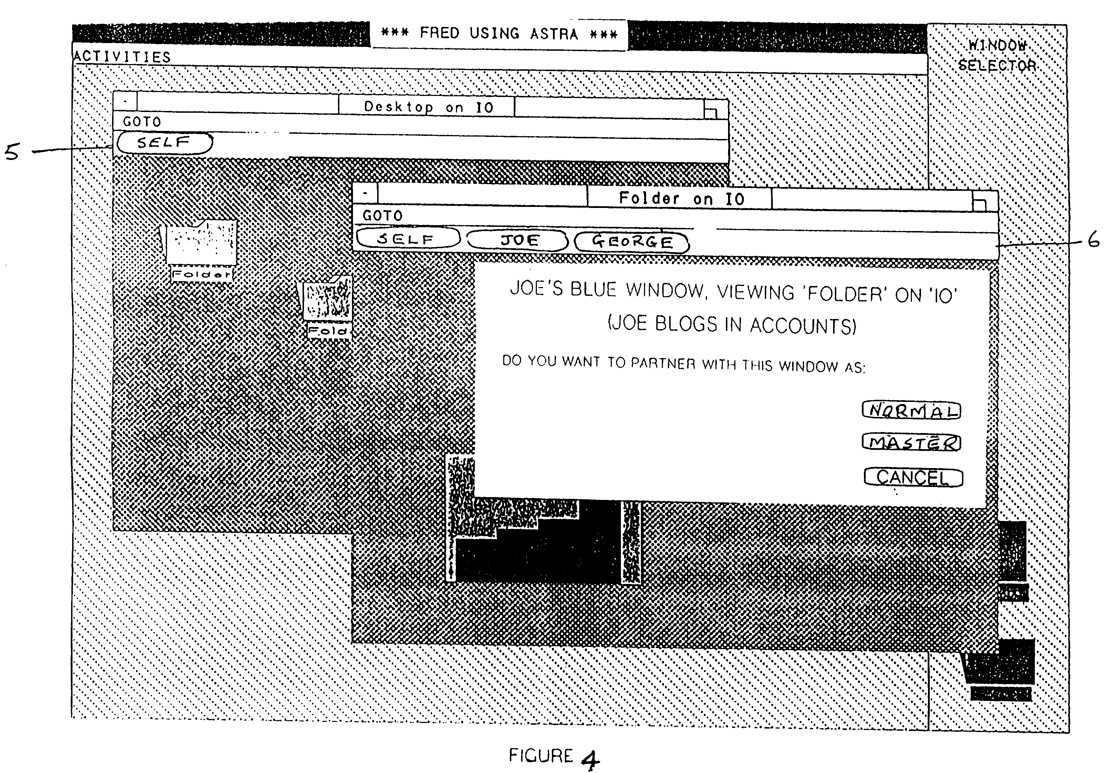

Since a feature of the system is that multiple viewers may be linked to the same object and each viewer has the capability not only to observe but also observe unexpected results. For example, icons might move or data might change. To facilitate an understanding of such effects the system provides viewers with indications of concurrent viewers. This is shown in Figure 4, where there is shown a presentation which has a first window which has been opened on "Desktop on IO" and a second window which has been opened on "Folder on IO". Both windows have presence bars 5 and 6 respectively. Bar 5 shows only "self" which indicates that no other viewers are open on the object of that window. Bar 6 on the other hand shows that in addition to "self" there are the viewers of "Joe" and "George". What is immediately clear, therefore, is that users Joe and George will be viewing "Folder on IO". All three users will observe the same view of "Folder on IO" and will be able to manipulate that object. Each pressure indicator has a border of a particular colour corresponding to the viewer in question. The presence of the displaying viewer is always shown as the first in the list. The bar may be switched off by the user to conserve screen space.

A coupling facility is provided for the sharing of expertise by means of coupling viewers. The fundamental concept needed for sharing is that of partnership. Two viewers can set themselves up as partners, which means no more than an agreement to pass each other information. Partnership is one to one agreement between two viewers,. but a viewer may be part of several agreements. This is how many viewer sharing is achieved.

When a viewer adds another viewer as a partner, the viewer can send and receive a special set of messages which make up the partnership protocol. The messages embody viewer level operations, but are informative in nature, and should not be interpreted as commands. What prompts a viewer to send a message, and how a recipient responds are not predetermined. Thus, a viewer may send the message 'I have changed to look at object X', but there is no guarantee that the sender actually is looking at X, nor is there any guarantee that the recipient will itself go and look at X. It is important to understand that it is the viewers which determine how they interpret and react to the protocol. This is the basis of the partnership concept - an agreement to talk. The semantics of the dialogue are decided by the parties involved.

Thus, two viewers may set themselves up as partners, with the understanding that they will attempt to 'shadow' each other. If the sharing was set up on an equal (normal/normal) basis, then the recipient of 'I have changed to look at object 'X' will decide to look at X also. At this level we have the effects of sharing navigation. It is easy to see how unequal (master/normal) sharing would be set up under such a system - the 'master' viewer need only ignore the messages from the normal viewer.

Note that the agreements described work solely at the access layer level. If two partners are viewing the same object, then they can each access and manipulate that object to the same extent that they could if they were independent.

Figure 4 shows the position where not only are the "SELF" and "JOE" viewers linked to the "Folder on IO" objects but also a request has been set up to couple these two viewers. The "SELF" viewer is displaying a menu which allows the user to select whether to partner the JOE viewer on (a) a "normal" basis (b) a "master" basis or (c) not at all (cancel).

Partnership on an equal (master/master) basis will allow the mutual transmission and display of navigational messages between the coupled viewers. In this way either viewer can follow the other at will or diverge. Partnership on a normal basis will allow incoming navigational messages to "SELF" from "JOE" (in this instance) to be treated as commands so that the SELF viewer automatically follows the navigation of the JOE viewer around the object world. In this way the JOE user can guide the SELF user around the system.

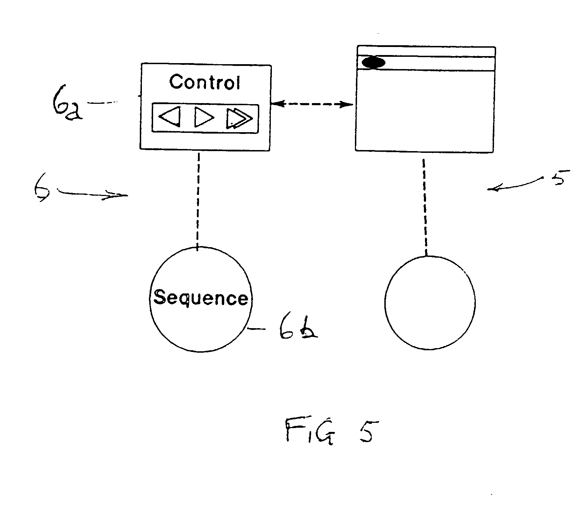

The present invention exploits the facility for coupling viewers by establishing what is effectively an automatic viewer in the form of a sequence object. Figure 5 shows a user's viewer 25 which is coupled to a sequence object 26. Object 26 has a presentation part 26a which is a control window, and a semantic part 26b which contains the path data. Normal coupling protocol is interpreted via the window 26a and causes the viewer 25 to follow a sequence set by the sequence object 26.

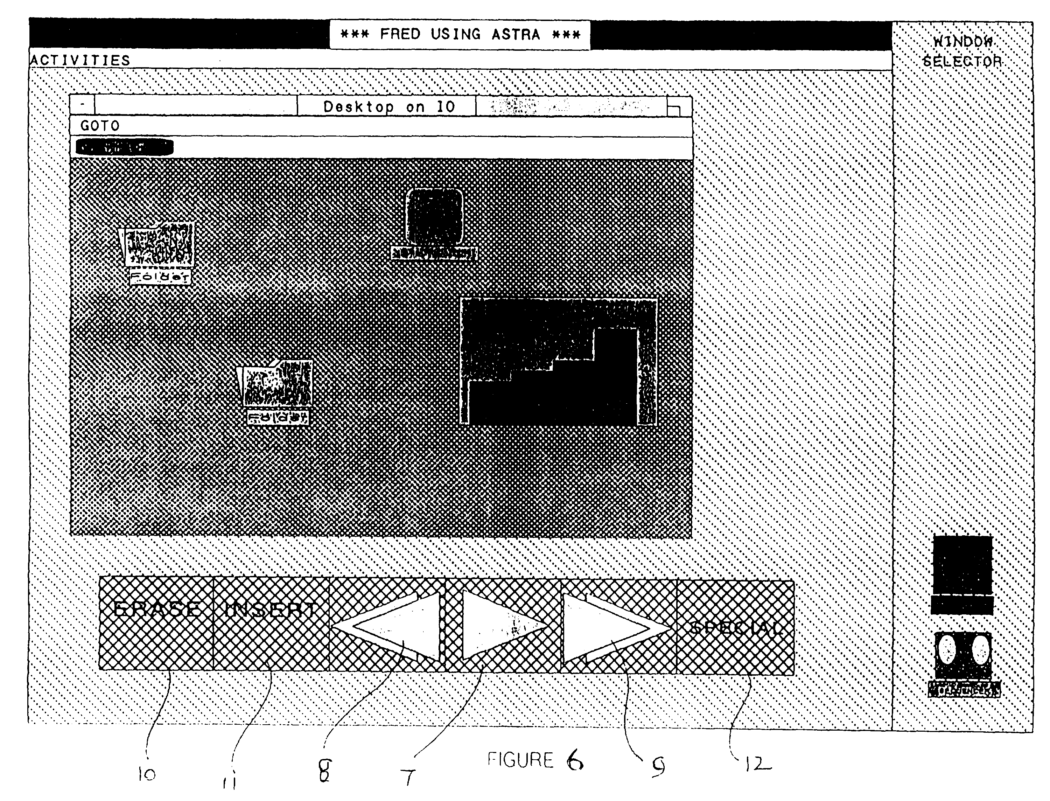

Figure 6 shows that the window 26a appears in the presentation of viewer 25 and shows "PLAY", "REWIND" and "FAST FORWARD" buttons 27, 28 and 29. By operating the mouse on these buttons the appropriate sequencing, back-stepping or skipping functions can be achieved. Operation of this control panel display is carried out in a manner analogous to operation of a tape player. Also provided are "ERASE"; "INSERT" and "SPECIAL" buttons 30, 31 and 32 whereby modifications may be made to the sequence object.

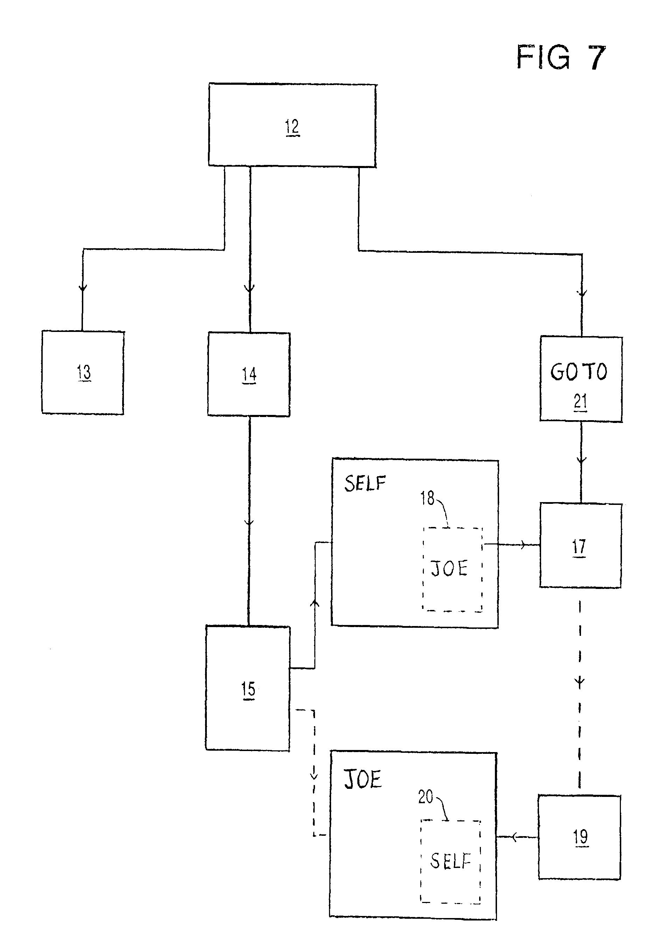

Referring to Figure 7 there is shown schematically the set of program procedures which allow the coupling facility to be effected. A procedure 12 is a mouse control procedure which monitors the position of the mouse and the state of its buttons. When the viewer shows a presence bar 6 as shown in Figure 4 it is possible to click the mouse on one of the viewer buttons "JOE" or "GEORGE". Procedure 12 responds to this to call a dialogue procedure 13. This displays the dialogue box shown in Figure 4. It is then possible to click the mouse on "NORMAL", "MASTER" or "CANCEL". An appropriate message is derived from the mouse control procedure to record the type of link required in a data structure. Then with the mouse button held down while over "SELF" and the mouse drawn to "JOE" and released a DrawLinkChain procedure 14 is invoked to draw a chain 7 on the screen.

A procedure 15 called AddLink is invoked for viewer "SELF" in order to establish the appropriate data structures which causes the "SELF" viewer to be linked to the "JOE" viewer with the selected coupling mode (master or normal). This results in the construction of a data structure associated with viewer "SELF" having a "table" 18 with contents representative of the viewer "JOE".

Procedure 15 is then invoked for viewer "JOE" and this results in a "table" 20 associated with "JOE" with contents representative of the linked viewer "SELF".

Coupling of viewers is effected when they rendezvous to view a common object. The presence mechanism is effective to ensure that the object being viewed has a table of the viewers which are viewing it.

When viewers are coupled, if the user of the "SELF" viewer elects to view another object a GOTO function 21 calls a procedure 17 with a message and the procedure identifies, from table 18, all the viewers coupled to "SELF" and sends information to them via an IWentToMessage. A procedure 19 interprets such messages received from other viewers and acts according to the coupling mode in effect. If the receiving viewer is normal the tests are made by procedure 19 to determine whether the viewer is already viewing the object and if not a GOTO instruction is issued to cause the receiving viewer to follow the sending viewer.

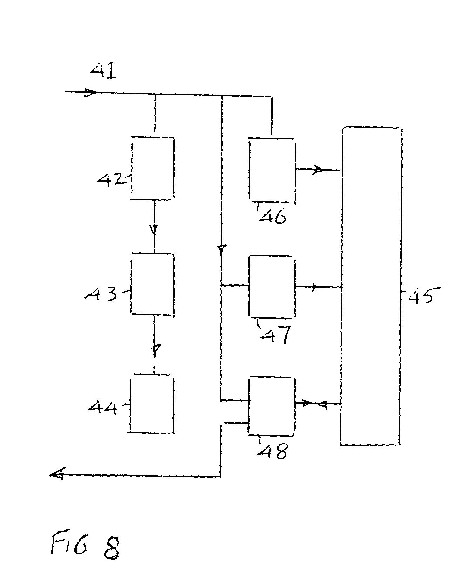

Referring to Figure 8 there is shown schematically a set of program procedures associated with a sequence object. A user operating a viewer has the option to choose to "view" a sequence object. If that option is chosen the viewer sends a message to the sequence object. This is received at 41 and invokes the AddViewer procedure 42. The sequence object thereby registers the viewer and establishes a link with the viewer by the AddLink procedure (shown here as 43) as described above. Additionally, however, another viewer is added to the sequence object, namely a control viewer, the procedure 44 "AddControl Viewer" being invoked automatically. In this way the central panel shown in Figure 6 is recovered from a stored file and linked to the viewer so as to be automatically displayed on the viewer. The mouse control procedure (Figure 7) is effective to pass to the sequence object control messages appropriate to the control panel.

The sequence object includes a path list 45. This is a list of objects identified by unique object identifiers or node addresses in the system data structure. The list is created by linking a viewer to the sequence object and navigating the viewer around the object world in a required path, or sequence. If a particular object being viewed is to be included in the path then the "insert" button 11 (Figure 6) is clicked by the mouse. If an object is to be removed from the sequence then the "erase" button 10 (Figure 6) is clicked when the object is being viewed. These actions invoke the procedures "AddObjId" 46 and "RemoveObjId" 47 respectively.

If the "Play" button 7 (Figure 6) is clicked then the sequence of objects in list 45 is followed and viewed at a predetermined speed. A "StartPlaying" procedure 48 is invoked to this end and this has the effect of making the sequence object a virtual viewer which is coupled to the user's viewer. The same navigated coupling messages as described above in connection with the coupling mechanism are passed from the sequence object to the user's viewer, indicating "IWentToObjId" for the respective objects in turn. Again the user is not compelled to follow the sequence laid down, although an automatic follower option may be provided, but generally he has the facility to break away and pursue his own path. The "STOP" and "PLAY" buttons of the control panel may be used in a manner which will readily be understood. The "FAST FORWARD" and "REWIND" buttons are effective to play at an increased object stepping rate, forwards and in reverse respectively.

## Claims

1. An object based computer system having at least one computer (PC) programmed to support objects with a processor unit (CPU) and program and data storage facilities (RAM, MS), the computer having an object manager for managing a plurality of objects including semantic objects containing stored data and at least one viewer (4) that is capable of being linked to said semantic objects to allow access to the latter, wherein a viewer (4) allows a user to access other objects by providing the appearance of the object to the user, the system allowing a viewer to be navigated around the object world (1) between semantic objects, and said plurality of objects further including at least one sequence object carrying predetermined navigator path data, the sequence object being capable of being linked to a said viewer (4) whereby the viewer can follow the predetermined path, while allowing access by the viewer (4) to semantic objects along said predetermined path.

2. An object based computer system as claimed in Claim 1 wherein there is provided a coupling mechanism (12, 14, 15), whereby different viewers may be coupled together in a set so that navigation within the system of one viewer by its user has the effect of passing navigational messages to the other viewer or viewers in the set so that those other viewers may indicate and/or may follow the navigation positions of the said one viewer, the sequence object utilising the same kind of navigational signals and thus behaving as a viewer coupled to the viewer to which it is linked.

3. An object based computer system as claimed in either of the preceding claims wherein there is provided a control panel representation file and a linking procedure effective to link a viewer (25) with a sequence object (26) automatically invokes a control panel procedure which overlays a control panel on the viewer.

4. An object based computer system as claimed in Claim 3 wherein the control panel is mouse operable and has representations for buttons which allow "PLAY"; "FAST FORWARD" and "REWIND" (27, 28, 29) in a manner analogous to a tape player.

5. An object based computer system as claimed in Claim 4 wherein the control panel has representations for "ERASE" and "INSERT" buttons (30, 31) which activate procedures which respectively delete from the path data and insert into the path data information pertaining to the identity of the current object being viewed.

6. An object based computer system as claimed in any of the preceding claims wherein the path data is in the form of node addresses of objects to be viewed.

## Patentansprüche

1. Ein objektbasiertes Computersystem mit zumindest einem Computer (PC), der programmiert ist, um Objekte zu unterstützen, mit einer Verarbeitungseinheit (CPU) und mit Programm- und Datenspeicherungseinrichtungen (RAM, MS), wobei der Computer eine Objektverwaltungseinrichtung zum Verwalten einer Mehrzahl von Objekten aufweist, die semantische Objekte, die gespeicherte Daten enthalten, und zumindest einen Betrachter (4) umfaßt, der mit den semantischen Objekten verbunden werden kann, um einen Zugriff auf die letzteren zu ermöglichen, wobei ein Betrachter (4) ermöglicht, daß ein Benutzer auf weitere Objekte zugreift, indem das Erscheinen des Objektes dem Benutzer bereitgestellt wird, wobei das System ermöglicht, daß ein Betrachter um die Objektwelt (1) zwischen den semantischen Objekten navigiert wird, und wobei die Mehrzahl der Objekte ferner zumindest ein Sequenzobjekt umfaßt, das vorbestimmte Navigatorwegdaten trägt, wobei das Sequenzobjekt mit einem Betrachter (4) verbunden werden kann, wodurch der Betrachter dem vorbestimmten Weg folgen kann, während ein Zugriff durch den Betrachter (4) auf die semantischen Objekte entlang des vorbestimmten Weges ermöglicht wird.

2. Ein objektbasiertes Computersystem gemäß Anspruch 1, bei dem ein Kopplungsmechanismus (12, 14, 15) vorgesehen ist, wodurch unterschiedliche Betrachter zusammen in einem Satz gekoppelt werden können, so daß eine Navigation in dem System eines Betrachters durch seinen Benutzer die Auswirkung hat, daß Navigationsmitteilungen zu dem anderen Betrachter oder den anderen Betrachtern in dem Satz weitergeleitet werden, so daß diese anderen Betrachter die Navigationspositionen des einen Betrachters anzeigen und/oder denselben folgen können, wobei das Sequenzobjekt dieselbe Art von Navigationssignalen verwendet und sich folglich als Betrachter verhält, der mit dem Betrachter gekoppelt ist, mit dem derselbe verbunden ist.

3. Ein objektbasiertes Computersystem gemäß einem der vorhergehenden Ansprüche, bei dem eine Steuerungsbedienfelddarstellungsdatei vorgesehen ist, und bei dem eine Verbindungsprozedur, die wirksam ist, um einen Betrachter (25) mit einem Sequenzobjekt (26) zu verbinden, automatisch eine Steuerungsbedienfeldprozedur aufruft, die auf dem Betrachter ein Steuerungsbedienfeld überlagert.

4. Ein objektbasiertes Computersystem gemäß Anspruch 3, bei dem das Steuerungsbedienfeld eine betreibbare Maus ist und Darstellungen für Knöpfe aufweist, die ein "ABSPIELEN", einen "SCHNELLEN VORLAUF" und einen "RÜCKLAUF" (27, 28, 29) auf eine zu einem Bandabspielgerät analoge Art und Weise ermöglichen.

5. Ein objektbasiertes Computersystem gemäß Anspruch 4, bei dem das Steuerungsbedienfeld Darstellungen für "LÖSCHEN"- und "EINFÜGEN"-Knöpfe (30, 31) aufweist, die Prozeduren aktivieren, die jeweils aus den Wegdaten Informationen löschen und in die Wegdaten Informationen einfügen, die zu der Identität des gegenwärtigen Objektes, das betrachtet wird, gehören.

6. Ein objektbasiertes Computersystem gemäß einem der vorhergehenden Ansprüche, bei dem die Wegdaten in der Form von Knotenadressen der zu betrachtenden Objekte vorliegen.

## Revendications

1. Un système informatique orienté objets, incluant au moins un ordinateur (PC) programmé pour prendre en charge des objets au moyen d'une unité de processeur (CPU) et de moyens de mémoire (RAM, MS) de programmes et de données, l'ordinateur comprenant un gestionnaire d'objets pour gérer une série d'objets qui inclut des objets de sémantique contenant des données mémorisées et au moins un visualiseur (4) qui peut être relié auxdits objets de sémantique pour permettre d'accéder à ces derniers, un visualiseur (4) permettant à un utilisateur d'accéder à d'autres objets en fournissant à l'utilisateur l'aspect de l'objet, le système permettant à un visualiseur de naviguer dans tout l'univers (1) d'objets entre des objets de sémantique, et ladite série d'objets incluant en outre au moins un objet de séquence transportant des données prédéterminées de trajet de navigateur, l'objet de séquence étant susceptible d'être relié audit visualiseur (4), de sorte que le visualiseur peut suivre le trajet prédéterminé, tout en permettant au visualiseur (4) d'accéder à des objets de sémantique le long dudit trajet prédétermine.

2. Un système informatique orienté objets selon la revendication 1, dans lequel est agencé un mécanisme de couplage (12, 14, 15) au moyen duquel différents visualiseurs peuvent être couplés entre eux en un ensemble d'une manière telle qu'une navigation, à l'intérieur du système, d'un premier visualiseur par son utilisateur exerce l'effet de faire passer des messages de navigation à l'autre visualiseur ou aux autre visualiseurs de l'ensemble, de sorte que ces autres visualiseurs peuvent indiquer et/ou peuvent suivre les positions de navigation dudit premier visualiseur, l'objet de séquence utilisant le même type de signaux de navigation et se comportant donc comme un visualiseur couplé au visualiseur auquel il est relié.

3. Un système informatique orienté objets selon l'une quelconque des revendications précédentes dans lequel un fichier de représentation de panneau de commande est agencé, et une procédure de liaison intervenant pour relier un visualiseur (25) à un objet (26) de séquence appelle automatiquement une procédure de panneau de commande qui se superpose à un panneau de commande sur le visualiseur.

4. Un système informatique orienté objets selon la revendication 3 dans lequel le panneau de commande peut être mis en oeuvre par souris et comporte des représentations pour des boutons qui permettent de "PLAY"; "FAST FORWARD" et "REWIND", c'est-à-dire "LIRE", "AVANCER RAPIDEMENT", "REBOBINER", (27, 28, 29) d'une manière analogue à un lecteur de cassette.

5. Un système informatique orienté objets selon la revendication 4 dans lequel le panneau de commande comporte des représentations pour des boutons "ERASE" et "INSERT", c'est-à-dire EFFACER et INSERER, (30, 31) qui activent des procédures qui respectivement annulent, dans des données de trajet, une information concernant l'identité de l'objet actuel en cours de visualisation et insèrent dans les données de trajet une telle information.

6. Un système informatique orienté objets selon l'une quelconque des revendications précédentes dans lequel les données de trajet sont en forme d'adresses de noeuds d'objets à visualiser.
